# EUROPEAN PATENT APPLICATION

(11) **EP 0 779 330 A1**
(43) Date of publication of application: **18.06.1997**
(21) Application number: 96120112.6
(22) Date of filing: 13.12.1996
(51) Int. Cl.: C08K 5/06, C08L 21/00, C08K 3/36

(54) **Sulfur curable mix compositions including silica and an antistatic agent, particularly for manufacturing tires; tire tread produced from such mixes; and tire comprising such a tread**

(30) Priority: 15.12.1995 IT TO951013
(71) Applicant: Bridgestone Corporation, Tokyo 104 (JP)
(72) Inventor: Cataldo, Franco, 00128 Roma (IT)
(74) Representative: Jorio, Paolo

(57) **Abstract**

A sulfur curable mix for manufacturing tires or parts thereof, in particular tire treads, and including an elastomer in the form of a diene polymer alone or mixed with other elastomeric polymers or copolymers; a filler selected from the group including silica and mixtures of carbon black and silica; and a solid antistatic agent in the form of a high-molecular-weight polyether, and added to the mix as such or in the form of a copolymer co-curable with the elastomers in the mix. Tires featuring treads formed from the above mix present excellent traction, low rolling resistance, and little or no accumulation of electrostatic charges on the tire.

## Description

The present invention relates to sulfur curable mix compositions comprising at least one elastomer comprising a diene polymer or copolymer; and a filler composed exclusively of silica or of mixtures of carbon black and silica. Such mixes containing silica as the filler are particularly suitable for manufacturing the tread of high-performance tires and/or (depending on the elastomers used) tires with good traction and a low rolling resistance. The invention also relates to a tire, or parts thereof, produced from such mixes, and to the use in such mixes of a particular class of antistatic agents.

The favourable properties of tires produced from mixes in which silica (silicon dioxide - SiO₂) forms at least part of the filler are well known. However, substituting silica for all or part of the carbon black traditionally used exclusively as a filler in the tire industry involves several drawbacks, mainly due to the high electrical resistivity of silica - about 10¹⁵ ohm.cm - as compared with carbon black, which normally results in mixes with a relatively low electrical resistivity.

Tires produced from mixes containing silica as the main or only filler therefore present a much higher electrical resistivity than those produced from mixes containing carbon black as the main or only filler.

As the tire rolls in contact with the road surface, an electrostatic charge is accumulated due to friction-induced charge separation between the road surface and the tire tread. In tires produced from mixes containing a large quantity of carbon black, and hence with a relatively low electrical resistance of the tread surface, the electrostatic charge is dissipated fairly easily by conduction, whereas, in tires produced from mixes containing silica, and hence with a high electrical resistivity of the tread surface, it is accumulated at the tread surface in significant quantities, and, besides causing discomfort to the occupants of the vehicle, e.g. when getting out, generates an electromagnetic field about the tire, which, rotating together with the tire, may generate radiofrequency waves capable of interfering with the electronic equipment on the vehicle, even to the extent of causing malfunctioning of the equipment or interfering with the reception of radio waves.

The above drawbacks may be overcome by adding to the silica-filled mixes an antistatic agent, preferably comprising surface-active agents such as those referred to in Italian Invention Patent Application n. TO94A000812 filed by the present Applicant. In actual use, however, experiments have shown that, when added to mix compositions, many known surface-active agents, such as glycerol, are totally ineffective as antistatic agents, whereas others, such as ethers of fatty alcohol and polyethylene glycol, are only effective in relatively large quantities, which may bring about a significant change in the performance and characteristics of the mix. What is more, practical problems invariably arise in systems with no special provision for adding large quantities of liquid components to the mix.

It is an object of the present invention to provide sulfur curable mix compositions for manufacturing tires or parts thereof, comprising silica as the filler, and designed to overcome the aforementioned drawbacks. More specifically, it is an object of the present invention to provide mix compositions including at least one component capable of substantially eliminating the effects of electrostatic charges accumulating on the tire, while at the same time having no negative effect on the road performance of the tire. Yet a further object of the present invention is to provide mixes of such a composition that the antistatic component also contributes actively towards the final mechanical-dynamic characteristics of the cured mix and, hence, towards the performance of the tire itself.

According to the present invention, there is provided a sulfur curable mix composition comprising:
(a) at least one elastomer comprising a diene polymer or copolymer; and
(b) a filler selected from the group comprising silica and mixtures of carbon black and silica;
   characterized by also comprising:
(c) at least one antistatic agent comprising an oligomer and/or a polymer or copolymer, elastomeric or not, comprising a main chain with a polyether structure.

More specifically, the antistatic agent is a high-molecular-weight polyether, where the term "high molecular weight" is intended to mean a weight of 50,000 to 1,000,000 daltons, and preferably roughly that of SBR commonly used in tire mixes (150-200,000 atomic mass units [AMU]). If oligomers are used, these will preferably have a molecular weight of 1,000 to 50,000 daltons.

More specifically, the antistatic agent according to the invention is a polyalkylene oxide or polyarylene oxide of the general formula:

- [(R)-O]ₙ- (1)

where R is methylene, ethylene, propylene, trimethylene, tetramethylene, a linear or ramified higher homologue thereof, a copolymer thereof, metha-, ortho- or paraphenylene or any other aromatic unit, substituted or not. The general formula (1) therefore also includes any one of the above radicals wherein one or more hydrogens are possibly replaced by another element, e.g. nitrogen, halogen, etc., or by a functional group, e.g. an alcohol group -OH, an acid group -COOH, a ketone group 〉C=O, a chloromethyl group -CH₂Cl, etc.

The antistatic agent used is preferably polyethylene oxide (PEO), polypropylene oxide-CO-allylglycidylether (PPO) or an epichlorohydrin elastomer such as HYDRIN™ (polyepichlorohydrin-CO-allylglycidylether).

Tests conducted by the Applicant have shown clearly that, used in appropriate quantities of no less than 5 phr (parts by weight per hundred parts of rubber polymers), the antistatic polymers according to the present invention, though not so effective as the same quantity of those in the Applicant's previous Italian Patent Application n. TO94A000812 (the content of which is incorporated herein as required by way of reference), may nevertheless be added to the mix in larger quantities without impairing the traction characteristics of the finished tire. Moreover, in the case of PPO, the antistatic compound fully substitutes for part of the raw rubber material, thus partly compensating the increase in cost. Finally, the antistatic compounds according to the invention are all solid, which means easier overall handling of raw materials and, more specifically, easier mixing of the green mix.

The basic mixes which may be used to advantage in combination with the present invention are described in European Patent n. 0543305 and Italian Invention Patent Applications n. TO94A000542 and TO94A000541 - the contents of which are included herein as required by way of reference - which describe in detail the characteristics of the polymers used, the fillers and the silane coupling agent.

Further characteristics and advantages of the present invention will be made clear in the following description of a number of non-limiting embodiments.

### EXAMPLE 1

Operating in the normal way using a roughly 400-liter Banbury mixer at a rotor speed of 10 to 80 rpm, 250 kg are prepared of each mix with the composition shown in Tables 1, 2 and 3. More specifically, mixing is performed in two stages: a first stage in which all the components, except for the curing agents, are mixed at a temperature of 130 to 180°C for 2 to 6 minutes; and a second stage in which the curing agents are added to complete the mix, and mixed at a temperature of below 100°C for 2 to 4 minutes. Finally, the mixes are molded into sheets and cured for 15 minutes at 160°C.

**TABLE 1**

| ***Compound Ingredients (phr)*** | ***A (CTR)*** | ***B*** | ***C*** | ***D*** | ***E*** | ***F*** | ***K*** |
|---|---|---|---|---|---|---|---|
| SSBR or E-SBR | 60 | 60 | 60 | 60 | 60 | 60 | 60 |
| IR⁽³⁾ | 40 | 40 | 40 | 40 | 40 | 40 | 40 |
| silica VN3 | 50 | 50 | 50 | 50 | 50 | 50 | 50 |
| Stearic acid | 2 | 2 | 2 | 2 | 2 | 2 | 2 |
| Oil/aromatic | 5 | - | - | - | - | - | 2.5 |
| Si69⁽⁵⁾ | 5 | 5 | 5 | 5 | 5 | 1 | - |
| ZnO | 2 | 2 | 2 | 2 | 2 | 2 | 2 |
| Sulfur | 1.5 | 1.5 | 1.5 | 1.5 | 1.5 | 1.5 | 1.5 |
| TBBS | 1 | 1 | 1 | 1 | 1 | 1 | 1 |
| DPG | 1 | 1 | 1 | 1 | 1 | 1 | 1 |
| Antiozonizing agent | 1 | 1 | 1 | 1 | 1 | 1 | 1 |
| PEO⁽¹⁾ | - | 2.5 | 5 | 10 | 15 | 20 | - |
| TRITON-X™⁽⁶⁾ | - | - | - | - | - | - | 5 |

| | | | | | | | |
|---|---|---|---|---|---|---|---|
| (1) Polyethylene oxide: Tg = -67°C; melting T = +66°C; ALDRICH Italy | | | | | | | |
| (3) Polyisoprene or a mixture of polyisoprenes with different microstructures | | | | | | | |
| (5) Bis-(3-triethoxysilylpropyl)-tetrasulfide; Degussa | | | | | | | |
| (6) Union Carbide | | | | | | | |
| (phr = parts by weight per 100 parts of rubber polymer) | | | | | | | |

**TABLE 2**

| ***Compound Ingredients (phr)*** | ***A1 (CTR)*** | ***B1*** | ***C1*** | ***D1*** | ***E1*** | ***F1*** | ***K*** |
|---|---|---|---|---|---|---|---|
| SSBR or E-SBR | 80 | 80 | 80 | 80 | 80 | 80 | 80 |
| IR⁽³⁾ | 20 | 17.5 | 15 | 10 | 5 | 0 | 40 |
| silica VN3 | 50 | 50 | 50 | 50 | 50 | 50 | 50 |
| Stearic acid | 2 | 2 | 2 | 2 | 2 | 2 | 2 |
| Oil/aromatic | 5 | - | - | - | - | - | 2.5 |
| Si69⁽⁵⁾ | 5 | 5 | 5 | 5 | 5 | 5 | - |
| ZnO | 2 | 2 | 2 | 2 | 2 | 2 | 2 |
| Sulfur | 1.5 | 1.5 | 1.5 | 1.5 | 1.5 | 1.5 | 1.5 |
| TBBS | 1 | 1 | 1 | 1 | 1 | 1 | 1 |
| DPG | 1 | 1 | 1 | 1 | 1 | 1 | 1 |
| Antiozonizing agent | 1 | 1 | 1 | 1 | 1 | 1 | 1 |
| PPO⁽¹⁾ | - | 2.5 | 5 | 10 | 15 | 20 | - |
| TRITON-X™⁽⁶⁾ | - | - | - | - | - | - | 5 |

| | | | | | | | |
|---|---|---|---|---|---|---|---|
| (1) Atactic polypropylene oxide-CO-allylglycidylether; Tg = -60°C, marketed as PAREL^{TM} by ZEON Italy | | | | | | | |
| (3) Polyisoprene or a mixture of polyisoprenes with different microstructures | | | | | | | |
| (5) Bis-(3-triethoxysilylpropyl)-tetrasulfide; Degussa | | | | | | | |
| (6) Union Carbide | | | | | | | |
| (phr = parts by weight per 100 parts of rubber polymer) | | | | | | | |

**TABLE 3**

| ***Compound Ingredients (phr)*** | ***A2 (CTR)*** | ***B2*** | ***C2*** | ***D2*** | ***E2*** | ***F2*** | ***K*** |
|---|---|---|---|---|---|---|---|
| SBR (S or E) | 80 | 80 | 80 | 80 | 80 | 80 | 80 |
| NR | 20 | 17.5 | 15 | 10 | 5 | 0 | 20 |
| silica VN3 | 50 | 50 | 50 | 50 | 50 | 50 | 50 |
| Stearic acid | 2 | 2 | 2 | 2 | 2 | 2 | 2 |
| Oil/aromatic | 5 | - | - | - | - | - | 2.5 |
| Si69⁽⁵⁾ | 5 | 5 | 5 | 5 | 5 | 5 | - |
| ZnO | 2 | 2 | 2 | 2 | 2 | 2 | 2 |
| Sulfur | 1.5 | 1.5 | 1.5 | 1.5 | 1.5 | 1.5 | 1.5 |
| TBBS | 1 | 1 | 1 | 1 | 1 | 1 | 1 |
| DPG | 1 | 1 | 1 | 1 | 1 | 1 | 1 |
| Antiozonizing agent | 1 | 1 | 1 | 1 | 1 | 1 | 1 |
| HYDRIN-T75 ™⁽¹⁾ | - | 2.5 | 5 | 10 | 15 | 20 | - |
| TRITON-X™⁽⁶⁾ | - | - | - | - | - | - | 5 |

| | | | | | | | |
|---|---|---|---|---|---|---|---|
| (1) Terpolymer 65% epichlorohydrin 30% ethylene oxide 5% allylglycidylether; Tg = -42°C, by NIPPONZEON | | | | | | | |
| (3) Polyisoprene or a mixture of polyisoprenes with different microstructures | | | | | | | |
| (5) Bis-(3-triethoxysilylpropyl)-tetrasulfide; Degussa | | | | | | | |
| (6) Union Carbide | | | | | | | |
| (phr = parts by weight per 100 parts of rubber polymer) | | | | | | | |

### EXAMPLE 2

2 mm thick, 12 x 4.5 cm rectangular strips are cut from the cured mix sheets in Example 1, and the electrostatic field of charged test pieces is measured using a Monroe 255 electrometer as follows:
- the electrometer is zeroed following the maker's instructions and left, turned on, on a wooden surface;
- each test piece is charged electrostatically by rubbing one side vigorously with a polyester cloth for 15 seconds;
- the rubbed side of the test piece is exposed immediately to the electrometer sensor at a distance of 2.5 cm, and the resulting electric field is read on the display.

The results are shown in Table 4, in which, to enable a better comparison, an electric field index is calculated by determining the ratio between the electric field value of the test piece and those of control mixes A, A1, A2 with no antistatic agent, and multiplying the result by 100. As can be seen, PEO substantially eliminates the electrostatic charge at as little as roughly 5 phr, i.e. is substantially as effective as the liquid antistatic agent in the Applicant's previous patent application (TRITON-X™). PPO and HYDRIN™ are slightly less effective.

**TABLE 4**

| Compound | Electric field index |
|---|---|
| A | 100 |
| A1 | 100 |
| A2 | 100 |
| K | 0 |
| B | 50 |
| C | 8 |
| D | 2 |
| E | 0 |
| F | 0 |
| B1 | 71 |
| C1 | 12 |
| D1 | 6 |
| E1 | 1 |
| F1 | 0 |
| B2 | 88 |
| C2 | 23 |
| D2 | 18 |
| E2 | 0 |
| F2 | 0 |

### EXAMPLE 3

The cured sheets in Example 1 are tested to ASTM D224O, D2632, D2048, D412, and the results for mixes B-F, B1-F1, B2-F2 compared with those of respective control mixes A, A1, A2 of the same composition but with no antistatic agents. The results are shown in Tables 5, 6 and 7.
As can be seen (Table 5), in excess (over 15 phr), PEO acts as a plasticizing agent in the mix with negative effects on the modulus, but is effective (Table 4) as an antistatic agent at as little as 5 phr. PPO (Table 6) presents the obvious advantage, as compared with PEO, of participating in the curing process and so substituting for part of the elastomers in the mix, but is less effective than PEO (Table 4) in eliminating the electrostatic charge. This does not represent a drawback, however, in that, by substituting for part of the other elastomers while preserving good overall physical properties of the mix, a larger quantity of PPO, even as much as 15-20 phr, may safely be added to the mix.
The performance of HYDRIN™ (Table 7) is more or less comparable with that of PPO, both in terms of co-curing with other diene elastomers, and in terms of mechanical and dynamic properties.

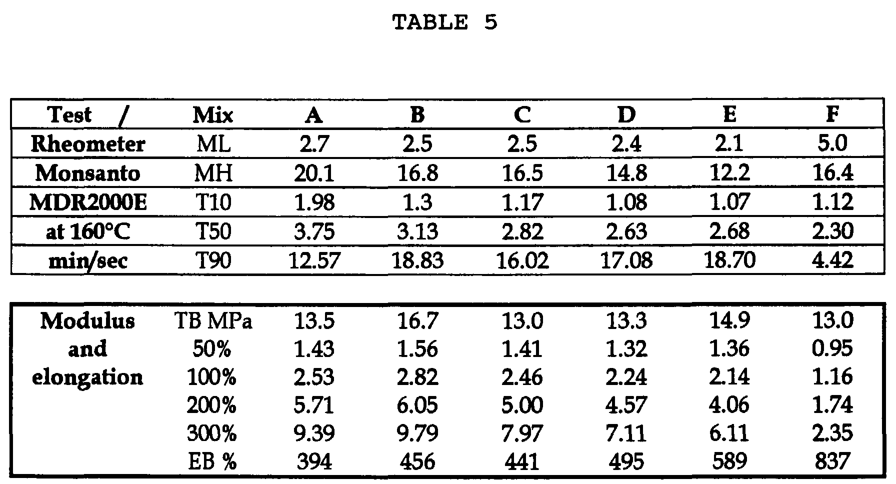

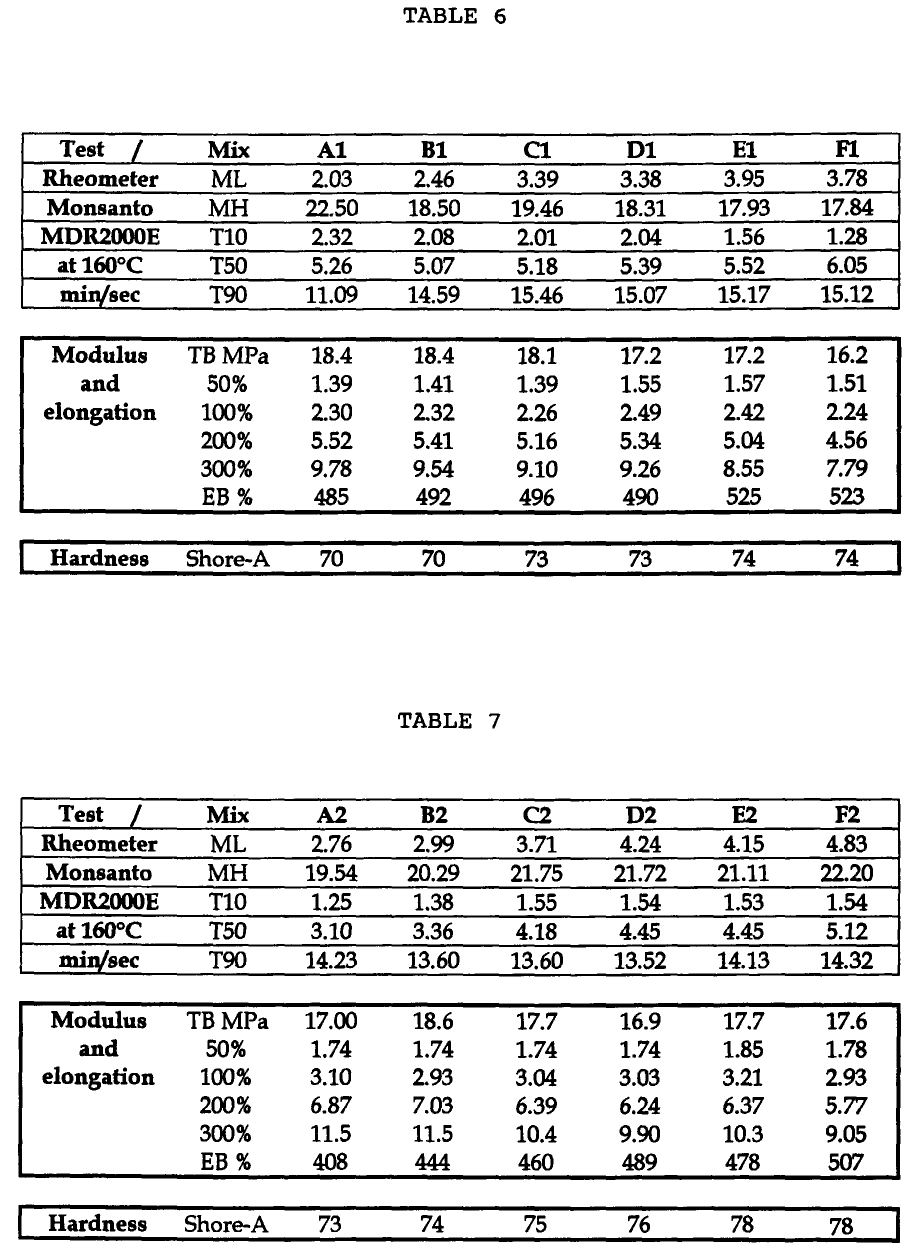

## Claims

1. A sulfur curable mix composition comprising:
(a) at least one elastomer comprising a diene polymer or copolymer; and
(b) a filler selected from the group comprising silica and mixtures of carbon black and silica;
characterized by also comprising:
(c) at least one antistatic agent comprising an oligomer and/or a polymer or copolymer, elastomeric or not, comprising a main chain with a polyether structure.

2. A curable mix composition as claimed in Claim 1, characterized in that said oligomer and/or polymer or copolymer is a high-molecular-weight polyether.

3. A curable mix composition as claimed in Claim 1 or 2, characterized in that said oligomer and/or polymer or copolymer presents such a molecular weight as to be solid at ambient temperature.

4. A curable mix composition as claimed in any one of Claims 1 to 3, characterized in that said oligomer presents a molecular weight of 1,000 to 50,000 daltons, and said polymer or copolymer presents a molecular weight of 50,000 to 1,000,000 daltons.

5. A curable mix composition as claimed in any one of the foregoing Claims, characterized in that said antistatic agent comprises a polymer or copolymer comprising a main chain with a polyether structure and presenting such a chemical structure as to co-cure with said at least one elastomer in the mix.

6. A curable mix composition as claimed in Claim 5, characterized in that said polymer or copolymer constituting the antistatic agent is an elastomer.

7. A curable mix composition as claimed in Claim 2, characterized in that the molecular weight of said polymer or copolymer constituting the antistatic agent is of the same order as that of SBR (150,000-200,000 AMU).

8. A curable mix composition as claimed in any one of the foregoing Claims, characterized in that said antistatic agent is a polyalkylene oxide or polyarylene oxide of the general formula:
- [(R)-O]ₙ- (1)
where R is methylene, ethylene, propylene, trimethylene, tetramethylene, a linear or ramified higher homologue thereof, a copolymer thereof, metha-, ortho- or paraphenylene or any other aromatic unit, substituted or not.

9. A curable mix composition as claimed in Claim 8, characterized in that said antistatic agent is selected from the group comprising: polyethylene oxide (PEO), polypropylene oxide-CO-allylglycidylether (PPO), 65% epichlorohydrin/30% PEO/5% allylglycidylether copolymer, with a random sequence of monomer units.

10. A curable mix composition as claimed in any one of the foregoing Claims, characterized by comprising 5 to 20 phr of said solid antistatic agent.

11. A tire tread formed from the cured mix composition as claimed in Claim 1.

12. A tire comprising a tread as claimed in Claim 11.

13. Use, in a sulfur curable mix for manufacturing tires or parts thereof, and comprising (a) at least one elastomer comprising a diene polymer or copolymer, and (b) a filler selected from the group comprising silica and mixtures of carbon black and silica, of an antistatic agent for preventing in-service accumulation of electrostatic charges on the tire; characterized in that said antistatic agent is a solid compound, or a mixture of solid compounds, including an oligomer and/or a polymer or copolymer, elastomeric or nor, comprising a main chain with a polyether structure.

14. Use as claimed in Claim 13, characterized in that said antistatic agent is a polyalkylene oxide or polyarylene oxide of the general formula:
- [(R)-O]ₙ- (1)
where R is methylene, ethylene, propylene, trimethylene, tetramethylene, a linear or ramified higher homologue thereof, a copolymer thereof, metha-, ortho- or paraphenylene or any other aromatic unit, substituted or not.
